# EUROPÄISCHE PATENTSCHRIFT

(11) **EP 1 496 271 B1**
(45) Veröffentlichungstag und Bekanntmachung des Hinweises auf die Patenterteilung: **30.08.2006**
(21) Anmeldenummer: 04015728.1
(22) Anmeldetag: 03.07.2004
(51) Int. Cl.: F16B 5/06, F16B 21/07, B60D 1/60, B65D 59/06

(54) **Schutzkappen-Anordnung für eine aus einem Steckbolzen und einer Haltefeder bestehenden Verbindungsanordnung für zwei Bauteile**
Protective cap for an assembly having a drive pin and spring legs
Capuchon protecteur pour assemblages comprenant boulon de fixation et branches de ressort

(30) Priorität: 09.07.2003 DE 20310502 U
(43) Veröffentlichungstag der Anmeldung: 12.01.2005
(73) Patentinhaber: Schwarz Verbindungs-Systeme GmbH, 75382 Althengstett (DE)
(72) Erfinder: Schwarz, Helmut, 71263 Weil der Stadt (DE); Homner, Bernhard, 75365 Calw (DE)
(74) Vertreter: Borchert, Uwe Rudolf

(56) Entgegenhaltungen:
- EP-A- 0 430 564
- DE-U- 9 016 393
- FR-A- 2 759 747
- US-A- 4 202 378

## Beschreibung

Die Erfindung bezieht sich auf eine lösbare Schutzkappen-Anordnung für eine aus einem Steck-Bolzen und einer Haltefeder bestehende Verbindungsanordnung für zwei Bauteile.

In der französischen Patentschrift 9701727 ist eine besonders gestaltete Clipverbindung für ein Kunststoffteil vorzugsweise mit einem Automobilblech beschrieben. Die Clipverbindung umfaßt eine Nase mit federnden Lippen, welche durch eine Öffnung im Blech gesteckt wird.

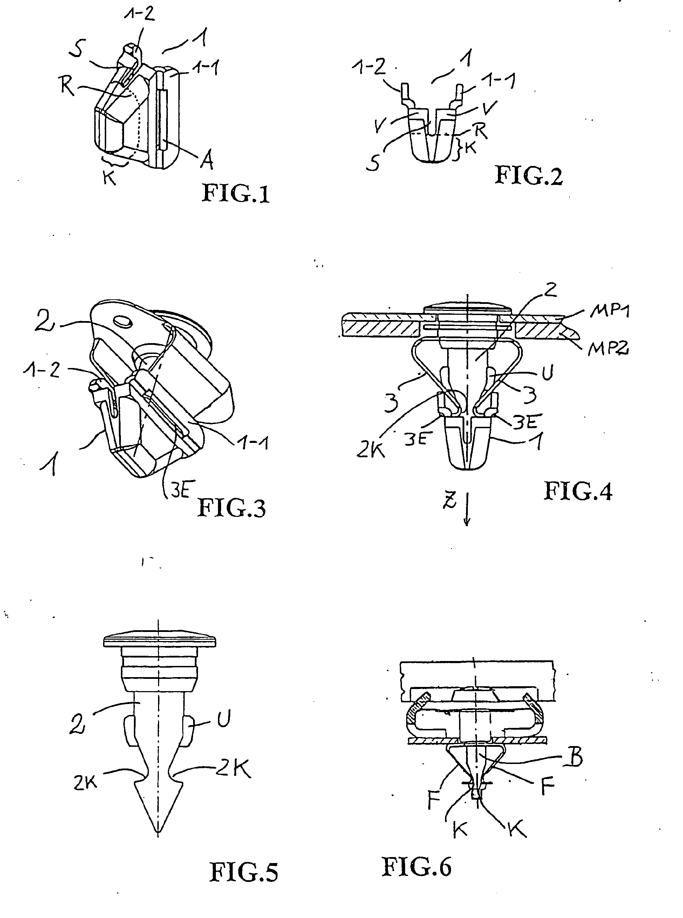

Im deutschen Gebrauchsmuster DE-U-9016393 ist Verbindungs-Vorrichtung (s.FIG. 1,2) für Teile beschrieben, welche aus einem Steck-Bolzen und einer Haltefeder besteht. Der Steckbolzen hat eine Führungsnase und zwei Haltekerben, in welche die abgewinkelten Enden der Haltefeder einklinken und somit den Bolzen festhalten.

Diese Vorrichtung wird vorzugsweise zum Anbringen lösbarer Wandverkleidungen in Flugzeugen eingesetzt. An bestimmten Stellen kann jedoch das aus der Haltefeder herausstehende freie "harte, metallene" Steckbolzen-Ende auf benachbarte "weichen" Teile (z.B. Rohre aus Kunststoff) unerwünscht durch Schaben und Kratzen o.ä. einwirken.

Es ist Aufgabe der Erfindung, eine solche Beeinträchtigung gefährdeter Teile zu vermeiden.

Diese Aufgabe der Erfindung wird durch Vorgabe einer Schutzkappen-Anordnung mit den im kennzeichnenden Teil des Anspruches 1 genannten Merkmalen gelöst.

Vorteilhafte Weiterbildungen der Erfindung sind in den Unteransprüchen gekennzeichnet.

Ein Ausführungsbeispiel der Erfindung ist in den Zeichnungen dargestellt und wird im folgenden näher beschrieben. Es zeigen:
FIG.1
   eine perspektivische Darstellung der erfindungsgemäßen Schutzkappen-Anordnung;
FIG.2
   eine Seiten-Ansicht der Schutzkappen-Anordnung gemäß FIG.1;
FIG.3
   eine perspektivische Darstellung der auf die - aus Steck-Bolzen und Haltefeder bestehenden - Verbindungsanordnung aufgesetzten Schutzkappen-Anordnung;
FIG.4
   eine Seitenansicht der Anordnung gemäß FIG. 3 mit SchnittDarstellung der Bauteile;
FIG.5
   Seitenansicht des Steck-Bolzens gemäß FIG.3 und FIG.4;
FIG.6
   Darstellung einer Steck-Bolzen/Haltefeder-Verbindungs-Anordnung nach dem Stand der Technik.
FIG.1 zeigt
   eine perspektivische Darstellung der erfindungsgemäßen Schutzkappen-Anordnung 1.

Die Schutzkappen-Anordnung 1 weist eine taschenähnliche Form mit zwei Breit- und zwei Schmalseiten auf, deren "Traggriffe" ( hiermit sind Durchbrüche zur Aufnahme von Federarmenden gemeint) an den Breitseiten angeordnet sind.
Die Schutzkappen-Anordnung verbreitert sich in Richtung ihrer Öffnung, wobei die Schmal- und Breitseiten eine quasi Trapezähnliche Form aufweisen.

Die Schutzkappen-Anordnung 1 besteht aus einem (das gedachte freie Steck-Bolzen-Ende überdeckende) Kappen-Teil K und aus vom gedachten Rand R des Kappen-Teils K ausgehenden federnden Schutzkappen-Schenkeln 1-1 und 1-2.

Die einander benachbarten Schutzkappen-Schenkel 1-1 und 1-2 sind jeweils durch einen Schlitz S voneinander beabstandet.

Jeder Schutzkappen-Schenkel 1-1 , 1-2 weist im Bereich seines freien Endes eine Aussparung A (zur Aufnahme des gedachten aus der Haltekerbe des Steck-Bolzens herausstehenden Federarm-Endes 3E - s. FIG.3) auf.

Das Kappen-Teil K hat eine annähernd rechteckförmige Innen-Bodenfläche (nicht dargestellt) mit jeweils einer Breit und Schmalseite, wobei jeder Breitseite ein Schutzkappen-Schenkel 1-1 und 1-2 zugeordnet ist.

Diese Schutzkappen-Schenkel 1-1 und 1-2 weisen seitliche - von Teilen der Schmalseiten ausgehende - Versteifungen V auf.

FIG.2 zeigt
eine Seiten-Ansicht der Schutzkappen-Anordnung 1 gemäß FIG.1: In dieser Darstellung sind - ebenso wie in FIG.1 - das Kappen-Teil mit K, die Schutzkappen-Schenkel mit 1-1 und 1-2 , der Trennschlitz zwischen dem unteren Teil beider Schenkel mit S und die von Teilen der Schmalseiten ausgehenden Versteifungen an der Schenkelbasis mit V gekennzeichnet.

FIG.3 zeigt
eine perspektivische Darstellung der auf die - aus Steckbolzen 2 und Haltefeder 3 bestehenden - Verbindungsanordnung aufgesetzten Schutzkappen-Anordnung 1 ; während
FIG.4
eine Seitenansicht dieser Anordnung mit einer Schnitt-Ansicht der Bauteile MP1 und MP2 zeigt.

Die Verbindungsanordnung für diese Bauteile MP1 und MP2 besteht aus einem mit dem ersten Bauteil MP1 verbindbaren Steck-Bolzen 2 ( s. auch FIG.5) und aus einer mit dem zweiten Bauteil MP2 verbindbaren Haltefederanordnung 3.
Der Steckbolzen 2 weist im Bereich seines freien Endes seitliche Haltekerben 2K auf, in welche jeweils ein freier Federarm eingreifen kann.

Diese freien Federarme 3 sind derart abgebogen , daß ihre Enden 3E aus den Haltekerben 2K herausstehen.

Die Schutzkappen-Anordnung 1 ist derart auf die Verbindungsanordnung aufstülpbar, daß das Kappen-Teil K das Steckbolzen-Ende überdeckt und die federnden Schutzkappen-Schenkel 1-1 und 1-2 die aus den Haltekerben 2K herausstehenden Federarm-Enden 3E übergreifen, wobei diese in die Aussparungen A "einrasten".
Dadurch ist zugleich ein sicherer fester Sitz der Schutzkappen-Anordnung gewährleistet.

Die Schutzkappen-Anordnung ist vorzugsweise aus einem abriebfesten Kunststoff hergestellt, der zugleich ein Federn der Schutzkappen-Schenkel gewährleistet.

Dadurch können beim Aufstecken der Schutzkappen-Anordnung auf die Verbindungsanordnung die Schutzkappen-Schenkel zunächst federnd nach außen ausweichen, bis die Federarm-Enden 3E in die Aussparungen A eingerastet sind.

Die federnden Schenkel gestatten ebenso ein Lösen der Schutzkappe von der Verbindungsanordnung, indem sie vorübergehend federnd nach außen gespannt werden , damit die Schutzkappen-Anordnung abgezogen werden kann.

Die Verbindungsanordnung kann auf unterschiedliche Art und Weise gelöst werden: Z.B. durch Drehen des Steck-Bolzens (für die in FIG. 5 dargestellte Anordnung), wobei ein Spreizen der Haltefederarme erfolgt,
oder durch einen mit dem Bolzen in Richtung Z (FIG.4) drückbaren Quersteg U, welcher ebenfalls ein Spreizen der Haltefederarme bewirkt.

Es sei betont, daß die Ausbildung der erfindungsgemäßen Schutzkappen-Anordnung nicht auf Darstellung in den Figuren beschränkt ist.

Je nach Ausbildung des Steckbolzen-Endes, der Anzahl seiner Haltekerben, der Anzahl der Federarme und der Ausbildung ihrer Enden, kann die Schutzkappen-Anordnung auch eine andere als rechteckige Grundfläche und eine von zwei abweichende Anzahl von Schutzkappen-Schenkeln aufweisen.
Ebenso können die Aussparungen A Durchbrüche oder auch nur Vertiefungen unterschiedlicher Ausbildung in Abhängigkeit der Form der Federarm-Enden sein.

## Patentansprüche

1. Lösbare Schutzkappe für ein Bolzenende und für aus seitlichen Kerben oberhalb des Bolzenendes herausstehenden freien Federarmenden (3E),
**gekennzeichnet**
**durch** sin Kappen-Teil (K) zur Aufnahme des Bolzenendes und durch vom gedachten Rand (R) des Kappen-Teils (K) ausgehende federnde Schutzkappen-Schenkel (1-1,1-2) zur Aufnahme der Federarmenden (3E),
wobei jeder Schutzkappen-Schenkel im Bereich seines freien Endes eine Aussparung (A) zur Aufnahme des äußeren Federarmendes aufweist.

2. Anordnung nach Anspruch 1,
**dadurch gekennzeichnet, daß**
die Aussparung eine Durchbruchsöffnung ist.

3. Anordnung nach Anspruch 1,
**dadurch gekennzeichnet, daß**
das Kappen-Teil (K) eine rechteckförmige Innen-Bodenfläche mit jeweils einer Breit- und Schmalseite aufweist,
und daß jeder Breitseite ein Schutzkappen-Schenkel zugeordnet ist.

4. Anordnung nach Anspruch 3,
**dadurch gekennzeichnet, daß**
das der Schutzkappen-Schenkel seitliche, von Teilen der Schmalseiten ausgehende Versteifungen (V) aufweist.

5. Anordnung nach einem der Anspruch 1 bis 4,
**dadurch gekennzeichnet, daß**
sich die die Schutzkappen-Anordnung in Richtung zu ihrer Öffnung erweitert.

6. Anordnung nach Anspruch 5,
**dadurch gekennzeichnet,**
**daß** die Seiten der Schutzkappen-Anordnung eine trapezähnliche Form aufweisen.

7. Anordnung nach Anspruch 2,
**dadurch gekennzeichnet, daß**
die Durchbruchsöffnung ein parallel zur Breitseite der Innen-Bodenfläche verlaufender Schlitz ist.

## Claims

1. A detachable protective cap for the end of a stud and for free spring arm ends (3E) projecting from lateral notches above the stud end,
**characterised**
**by** a cap part (K) to receive the stud end and by resilient protective cap arms (1-1,1-2) extending from the imaginary rim (R) to receive the spring arm ends (3E),
wherein each protective cap arm has in the vicinity of its free end a recess (A) for receiving the outer spring arm end.

2. An assembly according to Claim 1,
**characterised in**
**that** the recess is a through-opening.

3. An assembly according to Claim 1,
**characterised in**
**that** the cap part (K) has a rectangular inner base surface with a respective wide side and a narrow side, and in that a protective cap arm is allocated to each wide side.

4. An assembly according to Claim 3,
**characterised in**
**that** the protective cap arm has lateral reinforcements (V) extending from parts of the narrow side.

5. An assembly according to any one of Claims 1 to 4,
**characterised in**
**that** the protective cap assembly widens towards its opening.

6. An assembly according to Claim 5,
**characterised in**
**that** the sides of the protective cap assembly are of trapezium-like shape.

7. An assembly according to Claim 2,
**characterised in**
**that** through-opening is a slot extending parallel to the wide side of the inner base surface.

## Revendications

1. Capuchon protecteur amovible pour une extrémité de boulon et pour des extrémités libres (3E) de bras de ressort faisant saillie depuis des encoches latérales au-dessus de l'extrémité de boulon,
**caractérisé en ce que**
une partie du capuchon (K) reçoit l'extrémité du boulon,
des branches élastiques (1-1, 1-2) du capuchon protecteur partant du bord imaginaire (R) de la partie du capuchon (K) reçoivent les extrémités (3E) de bras de ressort,
chaque branche de capuchon protecteur présente dans la région de son extrémité libre un évidement (A) pour récevoir une extrémité de bras de ressort.

2. Capuchon protecteur selon la revendication 1,
**caractérisé en ce que**
l'évidement est une ouverture percée.

3. Capuchon protecteur selon la revendication 1,
**caractérisé en ce que**
la partie de capuchon (K) présente une surface de base intérieure rectangulaire avec à chaque fois un grand côté et un petit côté, et
une branche du capuchon protecteur est associée à chaque grand côté.

4. Capuchon protecteur selon la revendication 3,
**caractérisé en ce que**
la branche du capuchon protecteur présente des renforcements latéraux (V) partant de parties des petits côtés.

5. Capuchon protecteur selon l'une quelconque des revendications 1 à 4,
**caractérisé en ce que**
le capuchon protecteur s'élargit dans la direction de son ouverture.

6. Capuchon protecteur selon la revendication 5,
**caractérisé en ce que**
les côtés du capuchon protecteur forment un trapèze.

7. Capuchon protecteur selon la revendication 2,
**caractérisé en ce que**
l'ouverture percée est une fente parallèle au grand côté de la surface de base intérieure.
